# EUROPEAN PATENT SPECIFICATION

(11) **EP 2 513 474 B1**
(45) Date of publication and mention of the grant of the patent: **18.06.2014**
(21) Application number: 10801686.6
(22) Date of filing: 17.12.2010
(51) Int. Cl.: F03D 3/06

(54) **A FURLING MECHANISM FOR A VERTICAL AXIS TURBINE**
KLAPPMECHANISMUS FÜR EINE VERTIKALACHSENTURBINE
MÉCANISME DE FERLAGE POUR UNE TURBINE À AXE VERTICAL

(30) Priority: 17.12.2009 GB 0922067; 01.04.2010 GB 201005557
(43) Date of publication of application: 24.10.2012
(73) Proprietor: Tradewind Turbines Limited, Exeter, Devon EX2 8QE (GB)
(72) Inventor: CROCKER, Timothy Richard, Devon EX6 8RN (GB); NARRAMORE, Jonathan, Devon TQ13 7BS (GB)
(74) Representative: Chapman, Patrick
(86) International application number: PCT/GB2010/052135
(87) International publication number: WO 2011/073679

(56) References cited:
- EP-A1- 1 331 391
- DE-A1- 19 826 475

## Description

This invention relates to a furling mechanism for a vertical axis turbine, and particularly but not exclusively, for a vertical axis wind turbine.

### Background

Conventionally, wind turbines comprise a rotor having a number of blades of aerofoil cross section. The rotor is rotatably mounted to a tower about a horizontal axis. The aerofoil blades react to passing wind with a component of the resultant force acting to cause rotation of the rotor. The rotation of the rotor therefore can be used to produce useful energy from the kinetic energy of the wind.

This type of wind turbine, known as a Horizontal Axis Wind Turbine (HAWT) can generate significant power, but has a number of problems associated with it, for example:
1. They are a complex and thus relatively high cost solution
2. Such turbines are large and planning regulations restrict where they can be placed
3. The turbine blades are solid and can only adapt to variable wind-speed by altering the angle of attack of the blade. Generally they cannot operate in high wind speeds and have to use the angle of attack to 'feather' the blades to balance rotational forces, and minimise wind loading on the structure.
4. They may further need a mechanism to rotate the turbine so that its longitudinal axis is approximately at right angles to the direction of wind with the blades lying parallel to the wind, to further minimise structural loading in high winds.
5. They have enormous visual impact, which can be controversial and affect site planning decisions.
6. The blades and support structures are made from high strength, dense materials, and considerable kinetic energy and stresses can be generated in these parts. There are therefore significant operating safety considerations.
7. Most critically, because the blades rotate so that the velocity of the blade through the air is a multiple of wind speed, they generate considerable acoustic noise, and noise from large scale wind installations has been recognised as a substantive nuisance to local communities.

Wind turbines which rotate about a vertical axis (VAWT) are also known. One class of VAWT differs from HAWT in that they use sails rather than the aerofoil blades of HAWT and overcome many of the problems associated with HAWT. The sails are preferably aligned with respect to the direction of the wind using a control mechanism, such that reaction forces created by the change of momentum of the air contacting the sail surface cause a torque and thus create rotation of the sails about the vertical axis.

WO 02/29248 describes a VAWT having a number of sails mounted to shafts which rotate about a central vertical axle. Each sail is itself also rotatable about the shaft and, through the use of a gearing mechanism, is made to rotate at half the speed at which the sails rotate about the central vertical axle.

To allow the turbine to adjust to differing wind conditions, a folding or furling mechanism is provided which varies the surface area of the sails. The sail material is wound around the shaft and the furling mechanism operates to wind or unwind (furl or unfurl) the stored sail material to increase or decrease the area of sail material forming the sail. Such furling mechanisms are vital since they allow the sail to be decreased in surface area when the wind speed is high and thus avoid damage to the sail.

However, the prior art furling mechanism is detrimental to the efficiency of the sails. In particular, the prior art furling mechanism winds the sails around a central shaft which increases the passive air resistance of the sail and thus reduces its efficiency. Furthermore, if the furling mechanism fails, the sails may be left in an unfurled position i.e. full sail area is exposed to wind. This may damage the sail and turbine.

In addition, the prior art furling mechanism uses a weight system which directly relates the effective sail area to the speed of rotation, through variation in the centrifugal loads applied by the weights. Whilst providing a self-regulating system, this mechanism may be undesirable where it is necessary to reduce the effective sail area even when the speed of rotation is low, for example if maintenance is to be carried out.

The present invention provides an improved furling mechanism.

### Statements of Invention

In accordance with a first aspect of the invention, there is provided a furling mechanism for a sail of a vertical axis turbine, the furling mechanism comprising: first and second elongate furling spars attachable to first and second edges of the sail; wherein each of the first and second furling spars are each rotatable about their respective longitudinal axis such that, in use, rotation of the first and/or second furling spar causes the sail to be furled or unfurled.

Either of the first and second furling spars may fully furl the sail.

The first and second furling spars may be rotated by an electric motor. Furthermore, the first and second furling spars may be rotated by the electric motor via a suitable gearing mechanism.

The first and second furling spars may be oriented substantially vertically.

The first and/or second furling spars may be translatable toward or away from one another in response to the sail being furled or unfurled.

The first and second furling spars may be coupled to a boom of the turbine, along which the first and/or second furling spars are translatable.

The first and/or second furling spars may be each coupled to a traveller which is translatable along the boom.

The first and second furling spars may be biased away from each other.

The first and/or second furling spars may be each biased by an elongate tensioning member, which is placed under tension and the tension may be variable in operation.

The or each tensioning member may be connected to the or each traveller.

The or each tensioning member may comprise a resilient portion.

The resilient portion may be elastic cord.

The or each tensioning member may extend from one of the first and second furling spars in a direction opposite to the other of the first and second furling spars, over a guide member and back towards the centre of the boom where the tensioning member is attached. With this arrangement the furling spars are constrained to move in concert but in opposing directions.

The guide member may be a pulley.

The furling mechanism may further comprise a tension regulating element associated with the or each tensioning member for changing and/or maintaining the tension in the associated tensioning member.

The or each tension regulating element may change the distance between first and second ends of the associated tensioning member to change the tension and/or maintain the distance between the first and second ends of the tensioning member during furling or unfurling. The or each tension regulating element may operate to maintain approximately the same tension in the tensioning member during furling.

The or each tension regulating element may comprise a lead screw having a nut and screw.

The tension regulating element of the furling mechanism may further comprise an electric motor for rotating the screw of the lead screw.

The tensioning member may be attached to the nut of the lead screw.

The or each tensioning member may be connected to the first and/or second furling spars via an elongate gearing member; the or each gearing member extending from one of the first and second furling spars in a direction opposite to the other of the first and second furling spars, over a movable guide member coupled to the tensioning member and back towards an opposite end of the boom where the gearing member is attached, such that movement of the furling spar causes a reduced movement of the movable guide member.

The gearing member may pass over a fixed guide member between said one of the first and second furling spars and the movable guide member, such that said opposite end of the boom is in said direction opposite to the other of the first and second furling spars. The gearing member may be attached to the end of the boom.
The ratio of the movement of the furling spar to the movement of the movable guide member may be 2:1.

The or each gearing member may comprise an electrical cable which electrically connects the furling spar to the boom.

The movable guide member may be a pulley.

The first and second furling spars may be translatable and the first and second furling spars may be coupled such that movement of one of the first and second furling spars causes movement of the other of the first and second furling spars in an opposite direction.

The first and second furling spars may be coupled by an elongate linking member.

The linking member may be connected at one end to one of the first and second furling spars and at the other end to the other of the first and second furling spars, and wherein the linking members may extend from the one of the first and second furling spars in a direction opposite to the other of the first and second furling spars, over a guide member and back to the other of the first and second furling spars.

The furling mechanism may further comprise a second linking member, wherein the second linking member may extend from the other of the first and second furling spars in a direction opposite to the one of the first and second furling spars, over a guide member and back to the one of the first and second furling spars.

The tensioning members, gearing members and/or linking members may be connected to the first and/or second furling spars via the travellers.

The guide member may be a pulley.

The furling and unfurling of the sail may be controlled by a central controller, and the sail may be fully furled if communication with the central controller is lost.

The first and/or second furling spars may comprise an independent power source which automatically furls the sail fully if communication with the central controller or power is lost. The independent power source may comprise a battery.

The independent power source may supply the furling motors of one or more sails.

The furling mechanism may further comprise a sensor for detecting the position of the first and second furling spars.

The sensor may comprise a rotation sensor which counts the number of rotations of the electric motor.

The sensor may comprise a positional sensor which detects motion between the or each traveller and the boom.

The positional sensor may comprise one or more magnets disposed along the boom and a plurality of magnetometers located on the traveller.

The magnetometer may be a Hall effect sensor.

The sensor may detect the position of the tension regulating element.

The sensor may comprise a rotation sensor which counts the number of rotations of the electric motor or of the leadscrew.

The sensor may comprise a magnet in one of the tension regulating element and boom and a magnetometer in the other of the tension regulating element and boom.

In accordance with a second aspect of the invention, there is provided a furling mechanism for a sail of a vertical axis turbine, the furling mechanism comprising: a furling spar attachable to an edge of the sail; wherein the furling spar is rotatable about its axis and translatable towards or away from an opposite edge of the sail, such that the sail is furled or unfurled.

In accordance with a third aspect of the invention, there is provided a furling mechanism for a sail of a vertical axis turbine, the furling mechanism comprising: a furling means for furling and unfurling the sail; wherein the furling and unfurling of the sail is controlled by a central controller and wherein the furling means comprises an independent power source which automatically furls the sail fully if communication with the central controller or power is lost. The central controller may control the furling and unfurling of the sail via a local controller, which in normal operation may act as a slave to the central controller. The local controller may automatically furl the sail if communication with the central controller or power is lost.

### Brief Description of the Drawings

For a better understanding of the present invention, and to show more clearly how it may be carried into effect, reference will now be made by way of example, to the following drawings, in which:
Figure 1 is a front view of a sail assembly of the turbine;
Figure 2 is a top view of a portion of the sail assembly of Figure 1, showing the attachment of the sail to the furling spar;
Figure 3 is a front view of the sail assembly of Figure 1 attached to the turbine;
Figure 4 is a top cross-sectional view of the furling mechanism of the turbine;
Figure 5 is a side view of the furling mechanism of Figure 4;
Figure 6 is a top cross-sectional view of an alternative embodiment of the furling mechanism of the turbine;
Figure 7 is a perspective view of an alternative embodiment of a boom arrangement;
Figure 8 is a plan view showing the orientation of a sail of a vertical axis wind turbine as it rotates about a central axis;
Figure 9(a) is a plan view of the turbine, in which the sails are shown in an unfurled position;
Figure 9(b) is a plan view of the turbine of Figure 9(a), in which the sails are shown furled to a first position; and
Figure 9(c) is a plan view of the turbine of Figure 9(b), in which the sails are shown furled further to a second position.

### Detailed Description

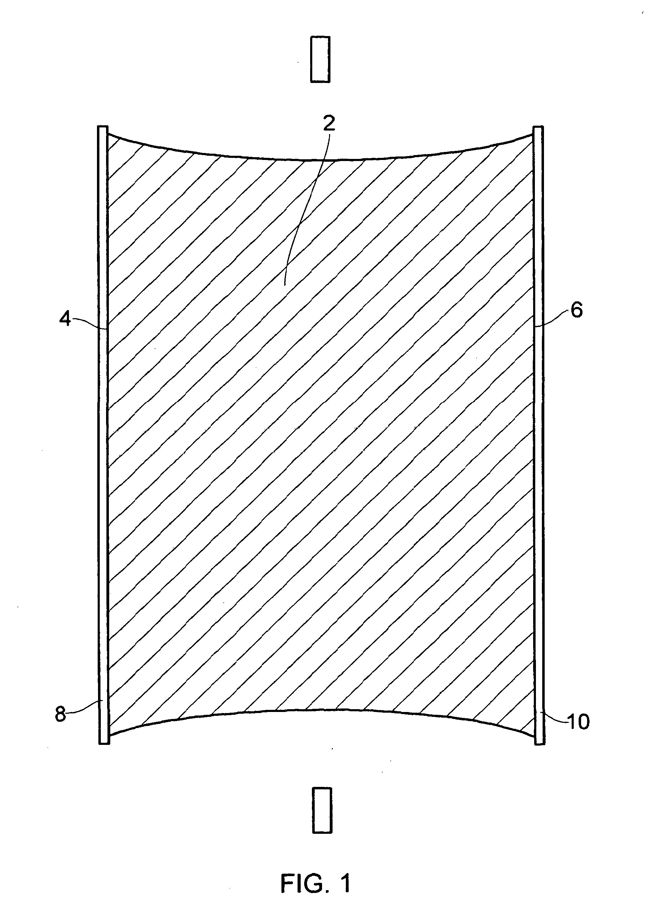

Figure 1 shows a sail assembly for a vertical axis wind turbine. The sail assembly comprises a sail 2 constructed from a thin and flexible yet high strength material which is resistant to stretch, such as a synthetic fibre. The sail 2 is a substantially rectangular sheet with first and second vertical edges 4, 6. The first edge 4 is attached to a first furling spar 8 and the second edge 6 is attached to a second furling spar 10. The first and second furling spars 8, 10 are each constructed from a multi-section cylindrical tube, typically made of an aluminium alloy. The multiple sections allow a small degree of articulation so that the first and second furling spars 8 and 10 can bend slightly under wind pressure.

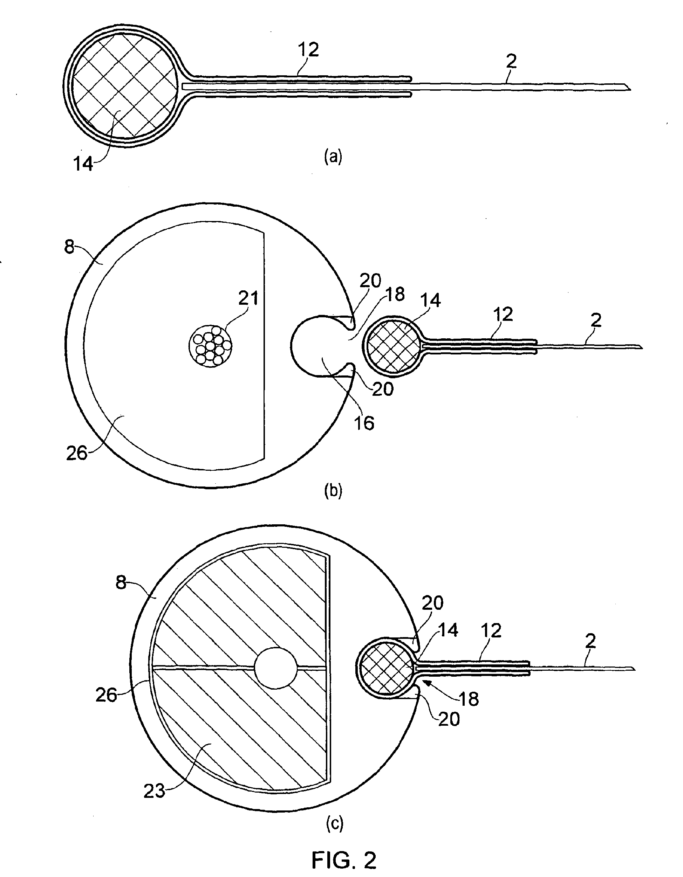

Figure 2 shows the attachment of the sail 2 to the furling spars (only the first furling spar 8 is shown). The first edge 4 of the sail 2 is provided with a tape 12 which runs along the first edge 4. The tape 12 is a strip of material which is folded over lengthwise and attached to either side of the first edge 4. A gap is left between the fold in the tape 12 and the first edge 4 so as to form a channel between the tape 12 and the first edge 4, which extends along the length of the first edge 4. A cord 14 is threaded through this channel, as shown in Figure 2(a). Such tapes are commonly available pre-made with cord in the sail-making industry.

A keyhole slot 16 is formed in a surface of the first furling spar 8 and runs along the length of the first furling spar 8, as shown in Figure 2(b). The keyhole slot 16 has a substantially circular cross-section with a greater diameter than that of the cord 14 housed within the tape 12. The circular cross-section of the keyhole slot 16 is interrupted by a radial opening 18 bounded by shoulders 20. The radial opening 18 has a width which is smaller than the diameter of the cord 14 housed within the tape 12 but which is sufficient to receive the first edge 4 and tape 12. Accordingly, the cord 14 housed within the tape 12 must be introduced into the keyhole slot 16 by threading it along the axis (axially) of the keyhole slot 16, either from above or from below. Once the cord 14 is threaded into the keyhole slot 16, as shown in Figure 2(c), it is prevented from being withdrawn in a radial direction by the shoulders 20.

The first and second furling spars 8, 10 further comprises an inner passage 26 which extends through the length of the furling spar and has a substantially 'D' shaped cross section, as shown in Figure 2(b). A wire rope or other high strength tensile member 21 is threaded through the passage 26 in an essentially central position. As shown in Figure 2(c), one or more guides 23 may be located at intervals along the length of the first and second furling spars 8, 10 to position the wire 21 in this central position.

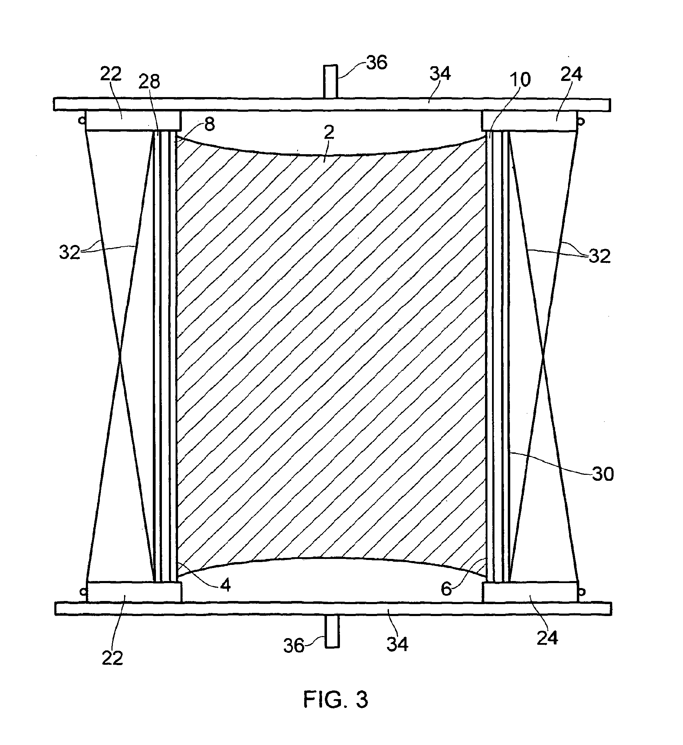

Figure 3 shows the sail assembly of Figure 1 attached to the turbine. The first furling spar 8 is coupled at either end to a first pair of travellers 22. Similarly, the second furling spar 10 is coupled at either end to a second pair of travellers 24. Each pair of travellers 22, 24 comprises a top traveller and a bottom traveller. The first and second furling spars 8, 10 are rotatably coupled to the first and second pairs of travellers 22, 24 such that the first and second furling spars can each rotate about their longitudinal axis.

As described above, the wire 21 is threaded through the passage 26 in each of the first and second furling spars and affixed at either end to the first and second pairs of travellers 22, 24.

To rotate the first and second furling spars 8, 10, the first and second pairs of travellers 22, 24 are provided with an electric motor and gearbox (not shown) which are engaged with the first and second furling spars 8, 10.

First and second vertical compression spars 28, 30 are connected between the first and second pairs of travellers 22, 24 adjacent to the first and second furling spars 8, 10. The first and second compression spars 28, 30 are positioned outboard of the first and second furling spars 8, 10 (i.e. further away from the centre of the sail assembly).

Each pair of travellers 22, 24 is provided with two rigging wires 32. The rigging wires 32 extend diagonally from opposite ends of the bottom traveller, one adjacent to the compression spar and one spaced from the compression spar, to opposite ends of the top traveller. The rigging wires 32 and/or wire 21 are tensioned using turnbuckles or bottlescrews (not shown). The first and second compression spars 28, 30 are connected to the first and second pairs of travellers 22, 24 in a manner which allows each traveller to pivot about the end of the compression spar in a plane of the sail assembly. The rigging wires 32 and wire 21 are tensioned against each other such that the wire 21 is under tension and thus holds the articulated first and second furling spars 8, 10 in an essentially straight line or gentle arc in response to wind forces. The provision of a pair of diagonal wires 32 also allows adjustment such that the compression spars 28, 30 and furling spars 8, 10 are held parallel to each other and orthogonal to a pair of horizontal booms 34. Accordingly, the first and second compression spars 28, 30 must withstand the compression which this creates.

The pivot mechanism between the compression spars 28, 30 and travellers 22,24 are further arranged to have bending strength such that they are able to take up the relatively small bending moment in the vertical plane that results from the action of the wind in the sail 2 being transferred to the booms 34.

The first and second pairs of travellers 22, 24 are translatable along the pair of horizontal booms 34. The pair of horizontal booms 34 comprises a top horizontal boom and a bottom horizontal boom, both of similar construction. The pair of booms 34 are connected to a vertical shaft 36 of the turbine about which they rotate. As described previously, the sail assembly is geared so that it preferably rotates about the vertical shaft 36 at half the rate that the vertical shaft 36 rotates about the centre of the turbine and with the sense of rotation described below.

The booms 34 may be connected to one another by a rope or other similar means. Two lengths of rope are attached vertically between the corresponding ends of the booms 34. An adjustment means is provided to tension the ropes and thus to transfer some of the weight from the lower boom to the upper boom and to a top portion of the vertical shaft 36. The rope may also comprise a conductive core and thus provide a direct and neat electrical routing to the top boom.

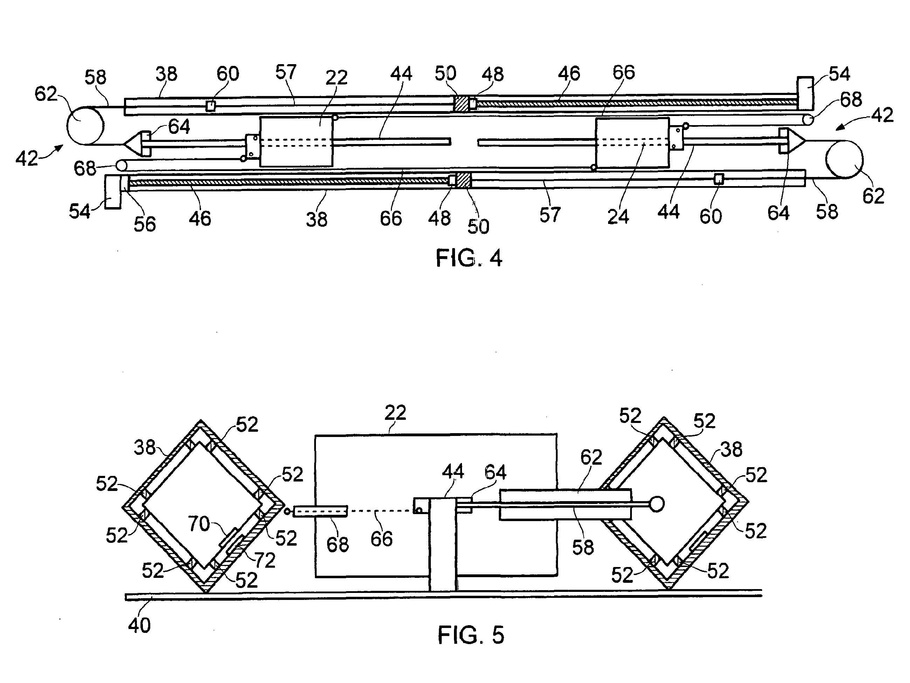

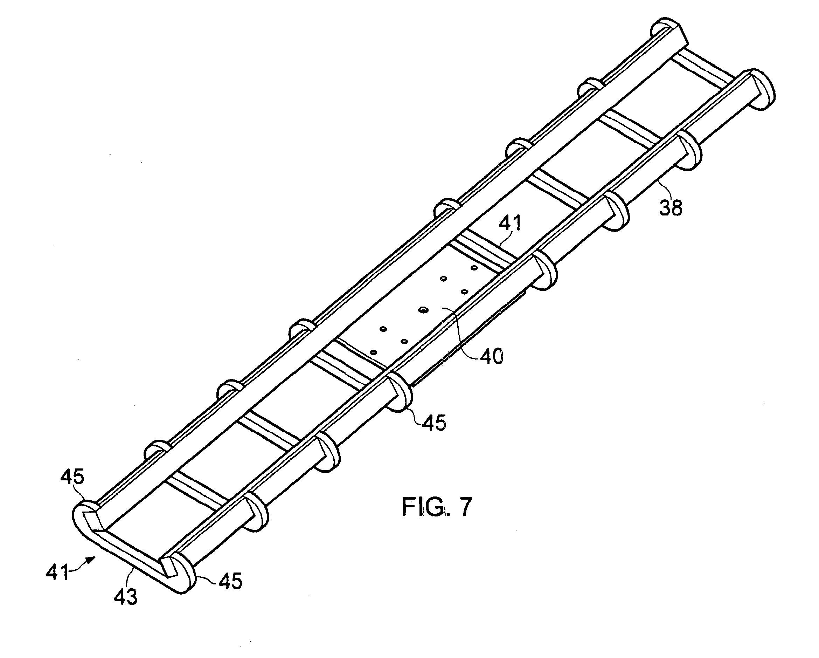

The pair of booms 34 are each preferably constructed from two hollow tubes 38 which have a square cross-section (see Figure 5). The hollow tubes 38 are spaced apart by a distance slightly greater than the width of the travellers 22, 24 and attached to a base plate 40. As shown, the hollow tubes 38 are attached to the base plate 40 along one corner of the tube's square cross-section. In order to save weight, the base plate 40 need not extend the full length of the boom 34. Instead, the base plate 40 may extend only a short distance either side of the centre of the booms, as shown in Figure 7, and be used to mount the booms 34 to the vertical shaft 36. The base plate 40 may cover approximately 20% of the length of the booms. A plurality of bracing ties 41 may be spaced along the booms 34. The bracing ties 41 are substantially C-shaped and comprise a straight portion 43 and a pair of curved portions 45 connected by the straight portion 43. The inner surfaces of the curved portions 45 are shaped to receive the booms 34. Accordingly, the bracing ties 41 prevent the distance between the .booms 34 from increasing. The bracing ties 41 may be attached to the booms 34 by composite construction means such as gluing and laminating, for example, although this may not be necessary.

Each of the pairs of travellers 22, 24 are movable along the booms 34. The travellers 22, 24 are each provided with a set of wheels, i.e. two pairs, (not shown) which contact the diagonal sides of the tubes 38 and allow the travellers 22, 24 to move smoothly along the booms 34.

The first and second furling spars 8, 10 are biased away from each other to tension the sail 2. Each pair of travellers 22, 24 is associated with tensioning arrangement consisting of an elongate tensioning member 42 and an elongate gearing member 44, as shown in Figure 4, which provides tension to bias the furling spars 8, 10 away from each other.

The tensioning arrangement of the first pair of travellers 22 is housed within one of the hollow tubes 38 and the tensioning arrangement of the second pair of travellers 24 is housed within the other of the hollow tubes 38.

Inside each of the hollow tubes 38 of the booms 34 is a tension regulating element consisting of a leadscrew arrangement. The leadscrew arrangement consists of a screw 46 lying parallel to the axis of the tube 38 on which is mounted a nut 48. The leadscrew arrangement is disposed at an opposite end of the tube 38 to the associated traveller. The nut 48 is connected to a boom slider 50 which is sized to prevent rotation of the slider 50 within the tube 38 and thus prevent rotation of the nut 48 to which it is connected. However, the slider 36 may advantageously be provided with rollers 52 (see Figure 5) which allow the slider 36 to freely translate along the tube 38. An electric motor 54 is provided to rotate the screw 46 and translate the nut 48 along the tube 38. The electric motor has a reduction gear 56 which decreases the speed of rotation but increases the torque of the electric motor 54. The motor 54 may be located outside of the tube 38 (i.e. inline with the tube 38 or offset from the longitudinal axis of the tube 38). Where the motor 54 is offset from the tube 38, the motor 54 may rotate the screw via appropriate gears. Accordingly, the motor 54 and reduction gear 56 are not constrained by the size of the tube 38. The electric motor 54 is associated with a rotation sensor (not shown) that counts the number of rotations of the motor and/or screw 46. The number of rotations is stored in a register (such as in a micro-controller), and the stored value is incremented up or down as another turn or part turn is counted.

The tensioning member 42 comprises a length of elastic cord 57, such as shock cord or other similar material. The length of elastic cord 57 may be a bundle of smaller lengths of shock cord. An end of the elastic cord 57 is attached to the slider 50 and extends along the tube 38 towards the opposite end. The other end of the elastic cord 57 is attached to a length of rope 58 using a connector 60. The rope 58 passes out of the end of the tube and over a pulley 62 and back towards the associated traveller 22, 24. The pulley 62 is oriented with its axis in a substantially vertical plane.

A second pulley 64 is attached to the other end of the rope 58. The axis of the second pulley 64 is oriented in a horizontal plane. The second pulley 64 and rope 58 are coupled to the associated traveller 22, 24 via the gearing member 44.

The gearing member 44 is a length of webbing, rope or other low stretch material, which is connected at one end to the associated traveller 22, 24, looped over the second pulley 64 and passed back down the boom 34 underneath the associated traveller and fixed to the base plate 40 near the centre of the boom 34. The wheels of the travellers 22, 24 travelling on the inner diagonal edges of the boom 38 allow the gearing member 44 to pass underneath it without impeding the movement of the travellers 22, 24.

Since the second pulley 64 is movable, the gearing member 44 transfers the movement of the associated traveller 22, 24 to movement of the tensioning member 42, but with a reduction in the distance moved. The gearing member 44 therefore acts as a gear and the distance moved by the traveller is twice that moved by the tensioning member 42 and second pulley 64 - a ratio of 2:1.

Conveniently, the gearing member 44 can also be used to locate or carry an electrical ribbon cable (not shown) which runs between gearing member 44 and the base plate 40 (or bracing ties 41), over the second pulley 64 and back above gearing member 44 to carry the electrical connection between the first and second pairs of travellers 22, 24 and the boom 34. Alternatively, a rope which has one or more conductive elements running through it may be used as the gearing member 44.

Each of the first and second furling spars 8, 10 is coupled to the other by an elongate linking member 66. The elongate linking member 66 couples the first and second furling spars 8, 10 via the first and second pairs of travellers 22, 24. The first and second furling spars 8, 10 are coupled such that movement of one of the first and second furling spars 8, 10 causes the movement of the other of the first and second furling spars 8, 10 in an opposite direction but by a substantially equal distance. To achieve this, each of the linking members 66 couples the first and second furling spars 8, 10 via a third pulley 68.

Like the gearing member 44, the linking member 66 is a length of low stretch rope or webbing. One of the linking members 66 is connected at one end to a rear side (outboard side) of the first pair of travellers 22 (one linking member 66 for the top and/or bottom traveller) and at the other end to a front side (inboard side) of the second pair of travellers 24. The linking member passes from the first pair of travellers 22 in an outboard direction, over the third pulley 68 and back to the second pair of travellers 24. Similarly, the other of the linking members 66 is connected at one end to a rear side of the second pair of travellers 24 passes over the third pulley 68 and back to a front side of the first pair of travellers 22 where it is connected.

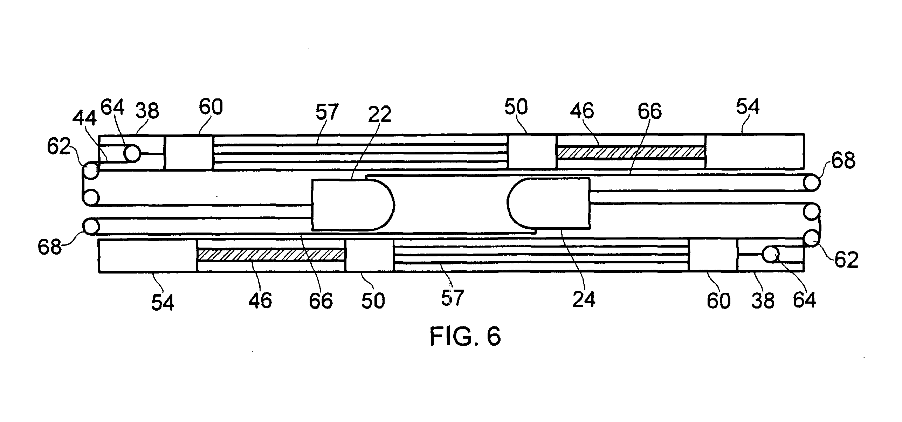

Figure 6 shows an alternative embodiment of the furling mechanism. Corresponding features are numbered as per Figure 5. In contrast to the rope 58 of the previous embodiment which passed out of the end of the tube 38, the rope 58 of this embodiment is contained within the tube 38 and the gearing member 44 passes over the first pulley 62 (shown in Figure 6 as being split into two separate pulleys for ease of routing, but could also be a single pulley) instead of rope 58. Furthermore, the second pulley 64 is contained within the tube 38. The gearing member 44 is connected at one end to the associated traveller 22, 24, looped over the first pulley 62 and passed back down into the tube 38. Inside the tube 38, the gearing member passes around the second pulley 64 and is affixed to the end of the tube 38. The operation of the furling mechanism is unaffected by these changes, with the distance moved by the traveller still being twice that moved by the tensioning member 42 and second pulley 64.

A means for sensing the position of the first and second furling spars 8, 10 relative to the booms 34 is provided. Each of the furling motors are equipped with rotation sensors (not shown) that count the number of rotations of the motor. The number of rotations is stored in a register (such as in a micro-controller), and the stored value is incremented up or down as another turn or part turn is counted.

In addition, a positional sensor is provided which senses the motion of the first and/or second pairs of travellers 22, 24 relative to the booms 34.

Each positional sensor comprises a plurality of permanent magnets and a Hall effect sensor (not shown). The permanent magnets are spaced along the length of the base plate 40 (or located on the bracing ties 41) and the Hall effect sensor is positioned on or close to the underside of one or more of the first or second pair of travellers 22, 24.

The first and second pairs of travellers 22, 24 only travel a distance a little less than half the width of the sail. A section of the base plate 40 adjacent to the top and/or bottom travellers of the first and/or section pairs of travellers 22, 24 may be equipped with magnets in a pattern that can be recognised by the magnetic sensors. The distance of travel may be divided into eight positions. On the base plate 40 at each of the eight positions there is either a magnet in a North or South orientation or there is no magnet. This allows a unique combination to be provided at each of the eight positions, as shown in the table below.

| **POSITION NUMBER** | **TUBE 38₁ POLARITY** | **TUBE 38₂ POLARITY** |
|---|---|---|
| 0 | N | S |
| 1 | S | X |
| 2 | N | N |
| 3 | X | S |
| 4 | x | N |
| 5 | S | S |
| 6 | N | X |
| 7 | S | N |

Alternately, a simpler pattern with lower positional resolution can be used, where all the odd or even numbered positions are omitted.

The Hall effect sensor produces a unique output for each position. The positional sensor therefore provides an absolute measurement of the position of the travellers 22, 24 against which a micro-controller can cross-calibrate with data from the furling motor rotation sensor.

A second positional sensor is provided to sense the position of the slider 50 in each of the tubes 38, as shown in Figure 5. The second positional sensor comprises a permanent magnet 70 located in the slider 50 and a plurality of gauss sensors 72, such as Hall Effect sensors, located on an inner surface of the tube 38. Alternatively, the gauss sensors 72 may be located on an outer surface of the tube 38. The output of the gauss sensors 72 will detect the magnet as the slider 50 passes over it and so the distance of movement of the slider is divided according to the number of gauss sensors employed, each providing a fixed reference against which a micro-controller can cross-calibrate data from the electric motor or leadscrew rotation sensor.

The furling motors for rotating the first and second furling spars 8, 10 are driven by electrical power, such as a 24 Volts DC supply. The operation of each furling motor is controlled by a furling controller (not shown) which communicates with a central controller for the whole turbine. The furling controller uses the output of the rotation sensors and positional sensors to position the furling spars in the required position with the required amount of sail exposed to the wind. The furling controller also controls the motor 52 of the tension regulating element.

Each furling controller is connected to the central controller via conventional data communication links. A wired serial communication means such as RS485 or the EIA 20 mA current loop, or a wireless communications means, such as Zigbee, may be used. This communications link may also include devices to measure wind speed and direction, to control the phasing of the rotation of the sails, and to control an electrical power circuit to batteries or an external load.

A slip ring arrangement or other equivalent device, such as an inductive coupler may be used to transfer power from the non-rotating elements of the turbine to the rotating elements of the turbine. Furthermore, where a wired communication means is used, the slip ring arrangement or other device may carry communications signals from the central controller to each furling controller.

The communications protocol used to communicate between the central controller and the furling motors is addressable so as to allow the central controller to send control messages to all furling motors in a broadcast mode, or to address them individually, for instance for self test.

The furling controllers are configured to automatically fully furl the sail by rotating the first and/or second furling spars 8, 10 if communication is lost with the central controller.

Where a current loop is used, this failsafe operation can be easily implemented, since each furling controller and the central controller can immediately detect a failure of the current loop if the current is interrupted for more than one data byte frame period. Additionally, or alternatively with other communications means, the protocol can implement a 'heartbeat' mode in which the central controller issues regular requests for the status of all the connected devices, and any of: the absence of that status request at an expected time, the absence of one or more responses, or the reception of a response indicating a failure status that requires furling, can be used as triggers for each furling controller to commence furling. The other sail assemblies of the turbine are configured so as to also fully furl in order to balance the turbine.

The data communications network may additionally have a hierarchical structure or a secondary communications bus on each boom 34, so that in the event of failure of the main communication bus, the controllers of the furling and tensioning systems on each boom 34 may communicate to coordinate control of tension when furling in response to a detected failure.

Furthermore, the furling controllers are configured to automatically fully furl the sail when power is lost. To allow this, an independent power source, such as a rechargeable battery pack, is connected to the furling controllers and the furling controllers are programmed to furl the sails if power is lost using the power from the independent power source.

The sails may advantageously also include one or more intentionally weak seams running vertically such that if all other failsafe mechanisms fail the sail will rip down one or more of the weak seams, leaving the separated portions of the sail attached to the furling spars with the ripped edges blowing in the wind. This has the effect of removing most of the wind load from the structure in extreme conditions. The weak seams may be made as part of the structure of the sail, or may be added by sewing a 'weak-link' tape into the sail. Both of these methods would require repair by normal sailmaking means. Alternatively a rejoinable fabric material such as Velcro may be used so that the sail can simply be repaired on the turbine when the extreme conditions have subsided.

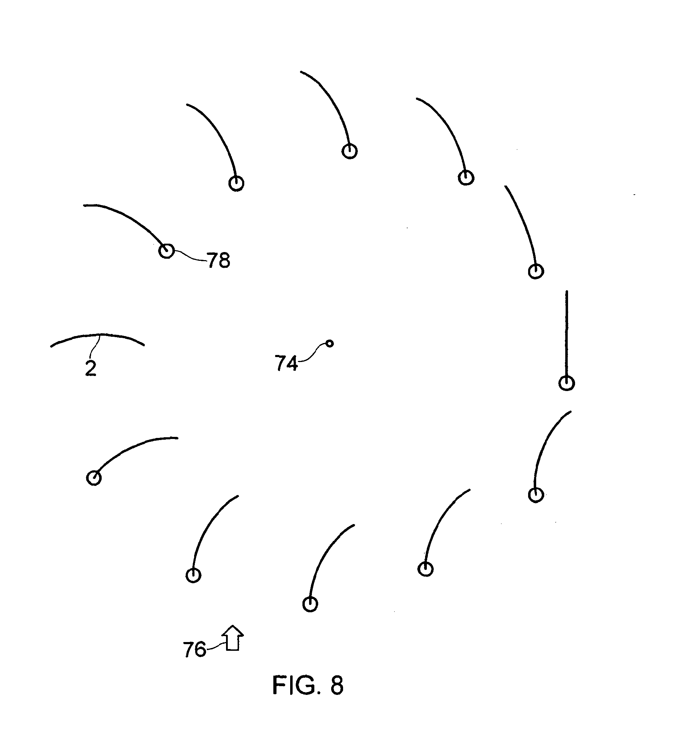

Figure 8 shows the sail 2 rotating about a central axis 74 of the turbine. As described previously, the sail 2 is connected to the turbine via a gearing mechanism and is made to rotate at half the speed at which the sails rotate about the central axis 74. In Figure 8, the direction of the wind is shown by arrow 76. The circle 78 marks one of the first and second vertical edges 4, 6 of the sail 2. It can be seen that after one rotation of the sail 2 around the central axis 74, the circle 78 is at the opposite side of the sail 2, demonstrating the half rotation of the sail 2 about its axis.

As the sail 2 rotates about its axis, the side of the sail 2 which faces the wind alternates. The tensioning member 42 places the sail 2 under constant tension and thus prevents the sail from making a slapping noise as it is filled by the wind.

As the sail 2 is filled by the wind, the tension in the tensioning member 42 increases. Consequently, the first and second pairs of travellers 22, 24 move inwards slightly. This allows the sail to bellow out slightly which in turn increases the angle that the sail makes at the first and second furling spars 8, 10 with the booms 34. In a steady wind there is thus a cyclic increase and decrease in tension of the tensioning member, and in the shape of the sail, as the sail rotates around the mast.

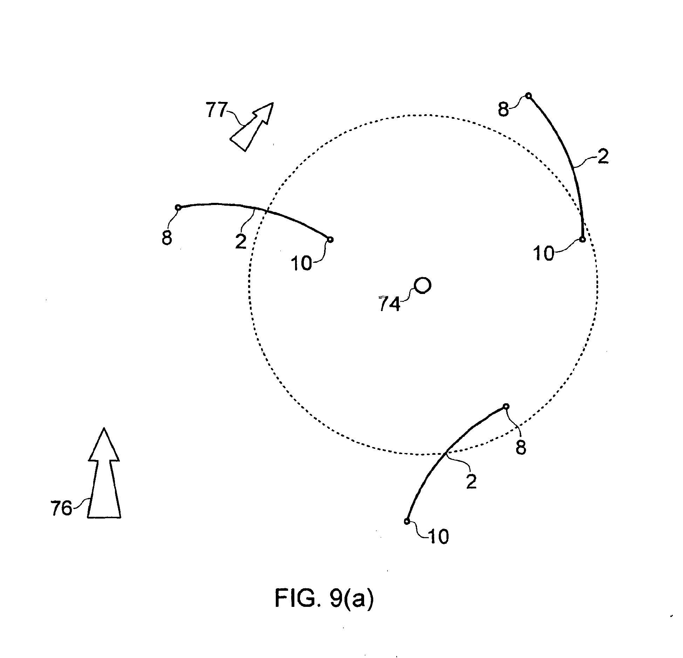

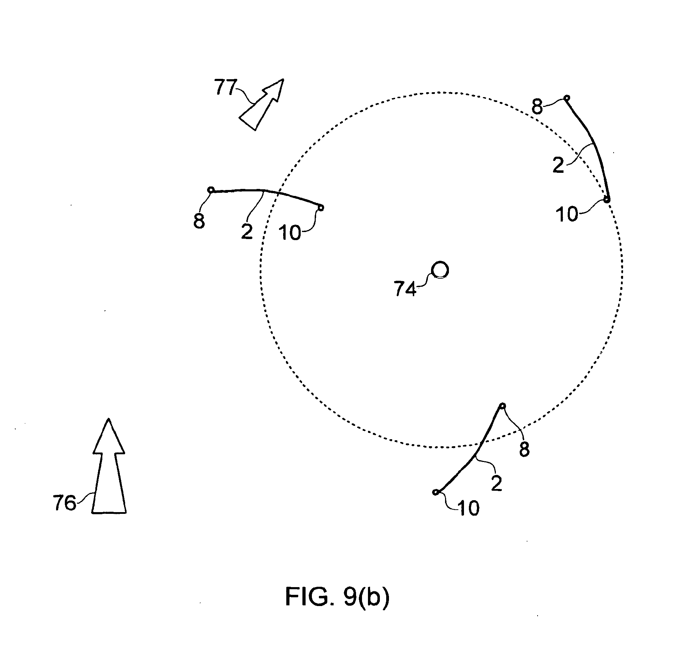

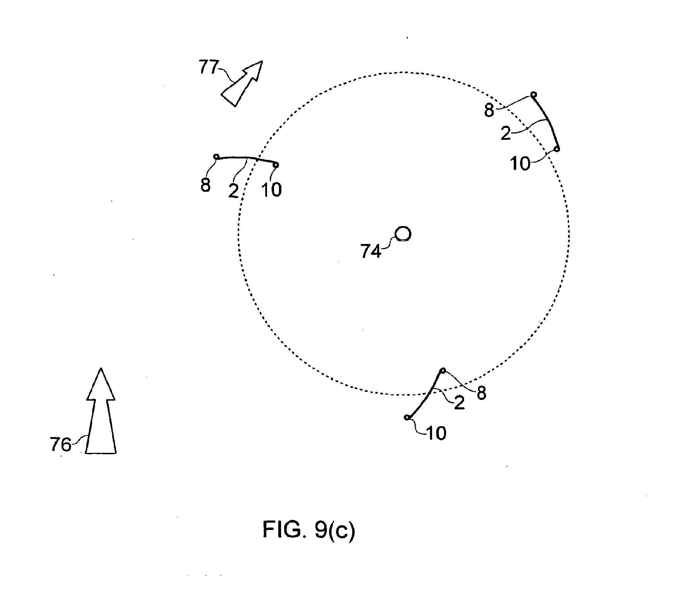

Figure 9 shows a complete turbine having three sails 2, rotating in a direction shown by arrow 77. In Figure 9(a) the wind speed is low. To extract the maximum energy from the wind, the sails 2 are fully unfurled and the maximum sail area is exposed to the wind. With low wind speed, it is also preferable for the sail to be under low tension, so that the shape of sail 2 approximates the streamlines of the air being deflected by the sail 2. The tension regulating element is therefore set to a position where the slider 50 is at or near the end of the screw 46 so that the distance between the slider 50 and associated traveller 22, 24 is as short as possible. Accordingly, the tensioning member 42 is under low tension.

As the wind speed increases the tension regulating elements increase the tension on the tensioning members 42 by rotating the screws 46 to increase the distance between the sliders 50 and the first and second pairs of travellers 22, 24. This action is in response to the increase in wind speed, so as to maintain the optimal sail angle and extract the maximum wind power.

Above a predetermined wind speed (identified to prevent damage to the turbine or dictated by generator capacity) the central controller instructs the furling controllers to rotate the first and second furling spars 8, 10 which causes the sail 2 to wrap around the first and second furling spars 8, 10, as shown in Figure 9(b). As the exposed sail area is reduced the first and second pairs of travellers 22, 24 are drawn together causing the tension in the tensioning members 42 to increase. To compensate for the change in position of the first and second travellers 22, 24, the tension regulating elements rotate the screws 46 to counteract this increase in tension.

As the wind speed increases further the first and second furling spars 8, 10 are rotated to reduce the exposed sail area further still, as shown in Figure 9(c) and the tension regulating elements can again move to counteract the increase in tension that would otherwise result from the furling action and the movement of the travellers.

In any wind speed, if maximum power is needed, then the central controller can set the amount of sail that is the maximum within safe limits for the sail and the structure, and the tension regulating elements can be instructed to tension the sails so as to extract maximum power. If at any time lower power is required, then the sail area may be reduced to minimise stresses on the structure, with the tension regulating elements adjusted appropriately.

The overall control will thus be on the basis of a 'map' (similar in all regards to 'engine mapping' in modern internal combustion engines) which determines the appropriate degree of furling taking into account the wind speed, the extent to which the wind is gusting, and the power that is required. The performance may be further optimised by the central controller making small adjustments to the map values which seek to extract even more power on a 'trial and error' basis. By this means new maps may be generated for particular turbines, or in particular locations.

The furling mechanism is provided with a number of failsafe mechanisms that ensure the sail is not left unfurled when the wind speed is high, which could result in damage to the turbine.

As described previously, the furling controllers are configured to automatically fully furl the sail 2 if communication is lost with the central controller or power is lost.

Furthermore, the sail 2 can be fully furled by either of the first and second furling spars 8, 10. Therefore if one of the furling motors or controllers fails, the sail 2 can still be furled to a safe position.

Symmetric operation is ensured by the linking member 66 which couples the first and second pairs of travellers 22, 24. With this arrangement, when one of the first and second pairs of travellers 22, 24 moves inward or outward, the other of the first and second pairs of travellers 22, 24 must move a corresponding distance inward or outward. In the event of one sided furling, the linking member 66 ensures centralised furling of the sail 2.

The linking member 66 has a dual purpose and also balances out the centripetal acceleration experienced during the complex double rotation of the turbine.

As described previously, the gearing member 44 acts as a gear and the distance moved by the traveller is twice that moved by the tensioning member 42 and second pulley 64. This allows the furling mechanism to fully furl the sail 2 even if the tension regulating element fails and the slider 50 is left in a position adjacent the electric motor 52 and reduction gear 54. Since the distance moved by the second pulley 64 is half that of the traveller, the elastic cord 57 is able to extend sufficiently to fully furl the sail 2 without the elastic cord 57 exceeding its breaking strength. The output torque of the electric motor 52 is sufficient to fully furl the sail 2 under this tension.

The furling mechanism of the present invention is preferably used with a vertical axis turbine having three or more sails. The turbine may have more than one set of sails arranged one on top of the other.

In Figures 7(b) and 7(c), the first and second furling spars 8, 10 are shown as having rotated in the same direction thus furling the sail 2 in an S-shape. However, the first and second furling spars 8, 10 may be rotated in opposite direction to furl the sail 2 in a U-shape.

Although the present invention has been described with reference to a turbine actuated by wind, it may be used with other fluids, such as water flowing in a river or in the sea.

The first and second furling spars 8, 10 may be moveably coupled to the booms 34 without the need of the first and second pairs of travellers 22, 24.

Several features of the invention have been described with reference to the first and second pairs of travellers 22, 24. However, it will be apparent that these features could be applied to only one of the first and second pairs of travellers 22, 24 and/or only one of the top and bottom traveller of each pair. For example, only the top or bottom travellers of each pair may be provided with a furling motor. Likewise, the tensioning arrangement may only be required for the top or bottom travellers, or indeed for only one of the first and second travellers.

Only one linking member 66 may be used to provide symmetric movement of the travellers. When one of the first and second pairs of travellers 22, 24 moves inwards the other pair of travellers will also move inwards under the action of the linking member 66. When the travellers move outwards the linking member 66 will become slack and thus will not cause the outward movement of the other traveller. However, instead the tensioning arrangement will cause the outward movement of the other traveller.

In an alternative embodiment, the tensioning member 42 may be connected directly to the first and second pairs of travellers 22, 24 omitting the gearing member 44.

The first and second furling spars 8, 10 have been described as being multi-section cylindrical tubes, however this need not be the case. Instead the first and second furling spars 8, 10 could be constructed from a solid tube which is compliant to allow articulation. Furthermore, the first and second furling spars 8, 10 could alternatively be structural elements. Where this is the case, the first and second furling spars can be pivotably mounted directly to the first and second pairs of travellers 22, 24 and the first and second compression spars 28, 30, wires 21, and rigging wires 32 can be omitted.

Figure 2 shows one method of attaching the sail 2 to the first and second furling spars 8, 10, however alternative methods will be apparent to a person skilled in the art.

Although the first, second and third pulleys 62, 64, 66 have been described as such, they could in fact be any suitable guide member. For example, the guide member could comprise a portion of curved material having a low coefficient of friction.

## Claims

1. A furling mechanism for a sail (2) of a vertical axis turbine, **characterised in that** the furling mechanism comprises:
first and second elongate furling spars (8, 10) attachable to first and second edges (4, 6) of the sail (2);
wherein each of the first and second furling spars (8, 10) are rotatable about their respective longitudinal axis such that, in use, rotation of the first and/or second furling spar (8, 10) causes the sail (2) to be furled or unfurled.

2. A furling mechanism as claimed in claim 1, wherein either of the first and second furling spars (8, 10) can fully furl the sail (2).

3. A furling mechanism as claimed in claim 1 or 2, wherein the first and second furling spars (8, 10) are rotated by an electric motor.

4. A furling mechanism as claimed in any one of the preceding claims, wherein the first and second furling spars (8, 10) are oriented substantially vertically.

5. A furling mechanism as claimed in any one of the preceding claims, wherein the first and/or second furling spars (8, 10) are translatable toward or away from one another in response to the sail (2) being furled or unfurled.

6. A furling mechanism as claimed in claim 5, wherein the first and second furling spars (8, 10) are coupled to a boom (34) of the turbine, along which the first and/or second furling spars (8, 10) are translatable.

7. A furling mechanism as claimed in claims 5 or 6, wherein the first and second furling spars (8, 10) are biased away from each other.

8. A furling mechanism as claimed in claim 7, wherein the first and/or second furling spars (8, 10) are each biased by an elongate tensioning member (42), which is placed under tension when the sail (2) is furled.

9. A furling mechanism as claimed in claim 8, wherein the or each tensioning member (42) extends from one of the first and second furling spars (8, 10) in a direction opposite to the other of the first and second furling spars (8, 10), over a guide member (62), such as a pulley, and back towards the centre of the boom (34) where the tensioning member (42) is attached.

10. A furling mechanism as claimed in claim 8 or 9, further comprising a tension regulating element associated with the or each tensioning member for changing and/or maintaining the tension in the associated tensioning member (42), wherein the or each tension regulating element may change the distance between first and second ends of the associated tensioning member (42) to change the tension and/or maintain the distance between the first and second ends of the tensioning member (42) during furling or unfurling to maintain approximately the same tension in the tensioning member (42).

11. A furling mechanism as claimed in any one of claims 8 to 10, wherein the or each tensioning member (42) is connected to the first and/or second furling spars (8, 10) via an elongate gearing member (44);
the or each gearing member 44 extending from one of the first and second furling spars (8, 10) in a direction opposite to the other of the first and second furling spars (8, 10), over a movable guide member (64), such as a pulley, coupled to the tensioning member (42) and back towards an opposite end of the boom (34) where the gearing member (44) is attached, such that movement of the furling spar (8, 10) causes a reduced movement of the movable guide member (64).

12. A furling mechanism as claimed in any one of claims 5 to 11, wherein the first and second furling spars (8, 10) are translatable and wherein the first and second furling spars (8, 10) are coupled, for example by an elongate linking member (66), such that movement of one of the first and second furling spars (8, 10) causes movement of the other of the first and second furling spars (8, 10) in an opposite direction.

13. A furling mechanism as claimed in any one of the preceding claims, wherein the furling and unfurling of the sail (2) is controlled by a central controller, and the sail (2) is fully furled if communication with the central controller is lost.

14. A furling mechanism as claimed in any one of the preceding claims, further comprising a sensor for detecting the position of the first and second furling spars (8, 10).

15. A vertical axis turbine, such as a wind turbine, comprising a furling mechanism as claimed in any one of the preceding claims.

## Patentansprüche

1. Aufrollmechanismus für ein Segel (2) einer Vertikalachsturbine, **dadurch gekennzeichnet, dass** der Aufrollmechanismus Folgendes umfasst:
einen ersten und einen zweiten länglichen Aufrollholm (8, 10), die an ersten und zweiten Rändern (4, 6) des Segels (2) befestigt werden können,
wobei der erste und der zweite Aufrollholm (8, 10) jeweils um seine jeweilige Längsachse drehbar ist, so dass im Gebrauch eine Drehung des ersten und/oder zweiten Aufrollholms (8, 10) das Aufrollen oder Entrollen des Segels (2) bewirkt.

2. Aufrollmechanismus nach Anspruch 1, wobei einer von dem ersten und dem zweiten Aufrollholm (8, 10) das Segel (2) vollständig aufrollen kann.

3. Aufrollmechanismus nach Anspruch 1 oder 2, wobei der erste und der zweite Aufrollholm (8, 10) durch einen Elektromotor gedreht werden.

4. Aufrollmechanismus nach einem der vorhergehenden Ansprüche, wobei der erste und der zweite Aufrollholm (8, 10) im Wesentlichen vertikal ausgerichtet sind.

5. Aufrollmechanismus nach einem der vorhergehenden Ansprüche, wobei der erste und/oder der zweite Aufrollholm (8, 10) hin zueinander oder weg voneinander übersetzbar sind als Reaktion auf das Aufrollen oder Entrollen des Segels (2).

6. Aufrollmechanismus nach Anspruch 5, wobei der erste und der zweite Aufrollholm (8, 10) mit einem Baum (34) der Turbine gekoppelt sind, entlang dem der erste und/oder der zweite Aufrollholm (8, 10) übersetzbar ist/sind.

7. Aufrollmechanismus nach Anspruch 5 oder 6, wobei der erste und der zweite Aufrollholm (8, 10) voneinander weg vorgespannt sind.

8. Aufrollmechanismus nach Anspruch 7, wobei der erste und/oder der zweite Aufrollholm (8, 10) jeweils vorgespannt ist/sind durch ein längliches Spannelement (42), das unter Spannung gesetzt wird, wenn das Segel (2) aufgerollt ist.

9. Aufrollmechanismus nach Anspruch 8, wobei das oder jedes Spannelement (42) von einem aus dem ersten und dem zweiten Aufrollholm (8, 10) in eine entgegengesetzte Richtung zu dem anderen aus dem ersten und dem zweiten Aufrollholm (8, 10) über ein Führungselement (62), wie eine Seilscheibe, und zurück zur Mitte des Baums (34) verläuft, wo das Spannelement (42) befestigt ist.

10. Aufrollmechanismus nach Anspruch 8 oder 9, das zudem ein Spannungsregelelement in Verbindung mit dem oder jedem Spannelement umfasst zum Verändern und/oder Beibehalten der Spannung in dem zugehörigen Spannelement (42), wobei das oder jedes Spannungsregelelement den Abstand zwischen dem ersten und dem zweiten Ende des zugehörigen Spannelements (42) verändern kann, so dass die Spannung verändert wird, und/oder den Abstand zwischen dem ersten und dem zweiten Ende des zugehörigen Spannelements (42) während des Aufrollens oder Entrollens beibehalten kann, so dass ungefähr dieselbe Spannung in dem Spannelement (42) beibehalten wird.

11. Aufrollmechanismus nach einem der Ansprüche 8 bis 10, wobei das oder jedes Spannelement (42) mit dem ersten und/oder dem zweiten Aufrollholm (8, 10) über ein längliches Übersetzungselement (44) verbunden ist,
wobei das oder jedes Übersetzungselement (44) von einem aus dem ersten und dem zweiten Aufrollholm (8, 10) in eine entgegengesetzte Richtung zu dem anderen aus dem ersten und dem zweiten Aufrollholm (8, 10) über ein mit dem Spannelement (42) gekoppeltes bewegbares Führungselement (64), wie eine Seilscheibe, und zurück zu einem gegenüber liegenden Ende des Baums (34) verläuft, wo das Übersetzungselement (44) befestigt ist, so dass eine Bewegung des Aufrollholms (8, 10) eine verringerte Bewegung des bewegbaren Führungselements (64) bewirkt.

12. Aufrollmechanismus nach einem der Ansprüche 5 bis 11, wobei der erste und der zweite Aufrollholm (8, 10) übersetzbar sind und wobei der erste und der zweite Aufrollholm (8, 10) gekoppelt sind, zum Beispiel durch ein längliches Verbindungselement (66), derart, dass eine Bewegung von einem aus dem ersten und zweiten Aufrollholm (8, 10) eine Bewegung des anderen aus dem ersten und zweiten Aufrollholm (8, 10) in eine entgegengesetzte Richtung bewirkt.

13. Aufrollmechanismus nach einem der vorhergehenden Ansprüche, wobei das Aufrollen und Entrollen des Segels (2) durch einen zentralen Regler geregelt wird und das Segel (2) vollständig aufgerollt wird, wenn die Kommunikation mit dem zentralen Regler verloren geht.

14. Aufrollmechanismus nach einem der vorhergehenden Ansprüche, der zudem einen Sensor umfasst zum Ermitteln der Position des ersten und zweiten Aufrollholms (8, 10).

15. Vertikalachsturbine, wie eine Windturbine, umfassend einen Aufrollmechanismus nach einem der vorhergehenden Ansprüche.

## Revendications

1. Mécanisme enrouleur pour une voile (2) d'une turbine à axe vertical, **caractérisé en ce que** le mécanisme enrouleur comprend :
des premier et deuxième espars enrouleurs oblongs (8, 10) aptes à être fixés à des premier et deuxième bords (4, 6) de la voile (2) ;
où chacun des premier et deuxième espars enrouleurs (8, 10) sont aptes à tourner autour de leur axe longitudinal respectif de sorte qu'en cours d'utilisation, la rotation du premier et/ou deuxième espar enrouleur (8, 10) amène la voile (2) à être enroulée ou déroulée.

2. Mécanisme enrouleur selon la revendication 1, dans lequel l'un quelconque des premier et deuxième espars enrouleurs (8, 10) peut complètement enrouler la voile (2).

3. Mécanisme enrouleur selon la revendication 1 ou 2, dans lequel les premier et deuxième espars enrouleurs (8, 10) sont amenés à tourner par un moteur électrique.

4. Mécanisme enrouleur selon l'une quelconque des revendications précédentes, dans lequel les premier et deuxième espars enrouleurs (8, 10) sont orientés sensiblement verticalement.

5. Mécanisme enrouleur selon l'une quelconque des revendications précédentes, dans lequel les premier et/ou deuxième espars enrouleurs (8, 10) sont aptes à translater vers ou au loin l'un de l'autre en réponse à l'enroulement ou au déroulement de la voile (2).

6. Mécanisme enrouleur selon la revendication 5, dans lequel les premier et deuxième épars enrouleurs (8, 10) sont couplés à une baume (34) de la turbine le long de laquelle les premier et/ou deuxième espars enrouleurs (8, 10) sont aptes à translater.

7. Mécanisme enrouleur selon les revendications 5 ou 6, dans lequel les premier et deuxième épars enrouleurs (8, 10) sont sollicités l'un au loin de l'autre.

8. Mécanisme enrouleur selon la revendication 7, dans lequel les premier et/ou deuxième épars enrouleurs (8, 10) sont chacun sollicités par un élément tendeur oblong (42) qui est placé sous tension lorsque la voile (2) est enroulée.

9. Mécanisme enrouleur selon la revendication 8, dans lequel le ou chaque élément tendeur (42) s'étend d'un des premier et deuxième épars enrouleurs (8, 10) dans une direction opposée à l'autre des premier et deuxième épars enrouleurs (8, 10), sur un élément de guidage (62), comme une poulie, et à nouveau vers le centre de la baume (34) où l'élément tendeur (42) est fixé.

10. Mécanisme enrouleur selon la revendication 8 ou 9, comprenant en outre un élément de régulation de tension associé à ou à chaque élément tendeur pour changer et/ou maintenir la tension dans l'élément tendeur associé (42), où le ou chaque élément de régulation de tension est apte à changer la distance entre les première et seconde extrémités de l'élément tendeur associé (42) pour changer la tension et/ou maintenir la distance entre les première et seconde extrémités de l'élément tendeur (42) durant l'enroulement ou le déroulement afin de maintenir approximativement la même tension dans l'élément tendeur (42).

11. Mécanisme enrouleur selon l'une quelconque des revendications 8 à 10, dans lequel le ou chaque élément tendeur (42) est relié au premier et/ou deuxième épars enrouleur (8, 10) par l'intermédiaire d'un élément d'engrenage oblong (44) ;
le ou chaque élément d'engrenage (44) s'étendant d'un des premier et deuxième épars enrouleurs (8, 10) dans une direction opposée à l'autre des premier et deuxième épars enrouleurs (8, 10), sur un élément de guidage mobile (64), comme une poulie, couplée à l'élément tendeur (42) et à nouveau vers une extrémité opposée de la baume (34) où l'élément d'engrenage (44) est fixé, de sorte que déplacement de l'épars enrouleur (8, 10) entraîne un déplacement réduit de l'élément de guidage mobile (64).

12. Mécanisme enrouleur selon l'une quelconque des revendications 5 à 11, dans lequel les premier et deuxième épars enrouleurs (8, 10) sont aptes à translater, et où les premier et deuxième épars enrouleurs (8, 10) sont couplés, par exemple par un élément de liaison oblong (66), de telle sorte que le déplacement d'un des premier et deuxième épars enrouleurs (8, 10) entraîne un déplacement de l'autre des premier et deuxième épars enrouleurs (8, 10) dans une direction opposée.

13. Mécanisme enrouleur selon l'une quelconque des revendications précédentes, dans lequel l'enroulement et le déroulement de la voile (2) est contrôlé par un dispositif de commande central, et la voile (2) est entièrement enroulée si la communication avec le dispositif de commande central est perdue.

14. Mécanisme enrouleur selon l'une quelconque des revendications précédentes, comprenant en outre un capteur pour détecter la position des premier et deuxième épars enrouleurs (8, 10).

15. Turbine à axe vertical, comme une turbine à vent, comprenant un mécanisme enrouleur tel que revendiqué dans l'une quelconque des revendications précédentes.
